# EUROPEAN PATENT APPLICATION

(11) **EP 3 657 494 A1**
(43) Date of publication of application: **27.05.2020**
(21) Application number: 18207206.6
(22) Date of filing: 20.11.2018
(51) Int. Cl.: G10K 15/04, G10K 15/02

(54) **ADAPTIVE ENGINE SOUND**

(71) Applicant: Alpine Electronics, Inc., Tokyo 145-0067 (JP)
(72) Inventor: Moldenhauer, Ingo, 70567 Stuttgart (DE)
(74) Representative: Schmitt-Nilson Schraud Waibel Wohlfrom Patentanwälte Partnerschaft mbB

(57) **Abstract**

The disclosure relates to an active vehicle sound generating apparatus, comprising a processing device configured to receive at least a first, second and third reference signal, the first reference signal indicative of sensor data of a first group, the second reference signal indicative of sensor data of a second group, and the third reference signal indicative of sensor data of a third group, wherein the first, second and third groups of sensor data are different from each other and respectively include sensor data not included in the respective other groups of sensor data. The processing device is configured to determine a vehicle driving style category from a plurality of vehicle driving style categories based on a combination of the at least first, second and third reference signals. At least one sound generator is coupled with the processing device for generating and emitting sound with a sound profile including one or more sound frequencies. The processing device is configured to determine the sound profile from a plurality of sound profiles dependent on the determined vehicle driving style category, wherein the at least one sound generator is configured to superimpose the emitted sound having the determined sound profile with vehicle sound emitted by an engine of the vehicle during vehicle motion to generate a composite vehicle motion sound.

## Description

The present disclosure relates to an active vehicle sound generating apparatus in which at least one sound generator is configured to superimpose emitted sound having a particular sound profile with vehicle sound emitted by an engine of a vehicle during vehicle motion to generate a composite vehicle motion sound, and a vehicle comprising such active vehicle sound generating apparatus.

Such apparatuses are known in the art. For example, such active vehicle sound generating apparatuses are used to generate sound of a particular sound profile to augment the natural sound emitted by an engine of a vehicle during driving of the vehicle to enhance the driver's or passengers' driving experience during driving. For example, the driver may select from limited predefined sound profiles by a switch or user interface.

Generally, vehicle sound can be quiet (such as in a modern car) or loud (such as with a motorbike), and sound can be soft (such as in a passenger car) or rough (such as in a sports car). Sound can also generate an impression as if the vehicle is a small vehicle or large vehicle. It is known that engine sound can be actively controlled by mechanical parts in the exhaust path or by active sound components, such as loudspeakers. Furthermore, it is known to actively create vehicle sound for electric vehicles. In such prior art apparatuses, the control of active sound emission is typically based on vehicle control data, such as RPM (revolution per minute) of the vehicle's engine, gear currently used with the gear transmission, vehicle speed, etc.

In JP 11-338486 A, there is provided an epochal engine sound generator capable of generating an engine sound different from an original engine sound in a vehicle by mounting the generator, capable of feeling thereby an atmosphere as if driving another vehicle, capable of enjoying driving with fresh feeling, and capable of recognizing a delight of the driving in the vehicle itself again. The generator is provided with a memory for storing an engine sound of a vehicle, and a sound reproducing device for reproducing the engine sound stored in the memory. Plural different engine sounds are stored in the memory, and the reproducing device is formed to serve as the selective reproducing device provided with a selection mechanism for selecting the plural engine sounds stored in the memory to be reproduced.

JP 2017-181916 A provides a vehicular sound effect generation device in which vehicle turn behavior is auditorily presented by powerful rumble sound of an engine to be capable of improving turning operation feeling of a crew member. A vehicular sound effect generation device generating sound effect of an engine on the basis of a vibration sound map including a fundamental wave sound consisting of a fundamental frequency component and a plurality of adjusting wave sounds consisting of frequency components other than the fundamental frequency component comprises sensors which detect traveling state of a vehicle, a lateral input amount setting unit which sets a lateral input amount using a physical amount related to at least one of movement in a width direction of the vehicle and movement in a turning direction of the vehicle on the basis of the traveling state detected by the sensors as a parameter, an adjusting wave sound selection unit which selects first-third adjusting wave sounds consisting of half order frequency components on the basis of the lateral input amount, and a sound effect generation unit which synthesizes the fundamental wave sound and the first-third adjusting wave sounds.

With such prior art systems, there is a drawback that the active sound depends on vehicle control data, such as current sensor data of the vehicle. However, the use of vehicle control data, such as sensor data, may not have the desired effect of enhancing the driver's driving experience as current sensor data may not be sufficient for indicating the "right" active sound profile which shall be augmented to the natural vehicle's engine sound, particularly in a wide area of varying vehicle motion profiles.

It would therefore be beneficial to provide an active vehicle sound generating apparatus which is capable of enhancing the driving experience over a wide range of varying vehicle motion profiles.

The invention relates to an active vehicle sound generating apparatus and a vehicle comprising such active vehicle sound generating apparatus according to the appended claims. Embodiments are disclosed in the dependent claims. According to an aspect, there is disclosed an active vehicle sound generating apparatus, comprising a processing device configured to receive at least a first, second and third reference signal, wherein the first reference signal is indicative of sensor data of a first group, the second reference signal is indicative of sensor data of a second group, and the third reference signal is indicative of sensor data of a third group, wherein the first, second and third groups of sensor data are different from each other and respectively include sensor data not included in the respective other groups of sensor data. The processing device is configured to determine a vehicle driving style category from a plurality of vehicle driving style categories based on a combination of the at least first, second and third reference signals. The active vehicle sound generating apparatus further comprises at least one sound generator coupled with the processing device for generating and emitting sound with a sound profile including one or more sound frequencies. The processing device is configured to determine the sound profile from a plurality of sound profiles dependent on the determined vehicle driving style category, wherein the at least one sound generator is configured to superimpose the emitted sound having the determined sound profile with vehicle sound emitted by an engine of the vehicle during vehicle motion to generate a composite vehicle motion sound.

Since the processing device determines a vehicle driving style category from a plurality of vehicle driving style categories based on a combination of the at least first, second and third reference signals, and determines the emitted sound profile from a plurality of sound profiles dependent on the determined vehicle driving style category, it is possible to consider the "greater meaning" of the sensor data, e.g. whether the driver intends to drive soft or sporty, and adjust the emitted sound profile accordingly, i.e. depending on the determined vehicle driving style. Thus, the active vehicle sound generating apparatus is capable of enhancing the driving experience over a wide range of varying vehicle motion profiles, since it considers a plurality of vehicle driving style categories from which the appropriate driving style and, hence, sound profile are selected.

Particularly, the sensor data of the first through fourth groups (and any additional sensor data of additional groups) are vehicle sensor data. According to an embodiment, such vehicle sensor data are indicative of a motion state of the vehicle and/or a motion state of one or more vehicle components, such as an engine of the vehicle, the vehicle chassis, a throttle pedal and/or one or more wheels etc. Particularly, the vehicle driving style is indicative of a vehicle motion profile, particularly determined according to a set time period of vehicle motion. Likewise, a vehicle driving style category is indicative of a vehicle motion profile category which may comprise multiple vehicle motion profiles. For example, each vehicle driving style category is indicative of one or more vehicle motion profiles which are different from the vehicle motion profiles associated with the respective other categories. A vehicle motion profile can be characterized by a set (i.e. combination) of a plurality of different sensor data, not only sensed or sampled at a particular point of time during vehicle motion and indicative of vehicle status at that particular point of time, but sensed or sampled (i.e. monitored) over a particular time period. After sampling of sensor data over the particular time period, the processing device is capable of determining the vehicle motion profile and thus the vehicle drive style. For example, if the vehicle speed is high along with high RPM over a certain time period as compared to another sampling phase with the same time period in which - at same vehicle speed - RPM is not as high, this may be indicative of a sporty driving style or motion profile. That is, vehicle driving style or motion profile is determined based on a combination of at least three different sensor signals of different type, preferably over a particular time period.

The type of combination of sensor data may vary, as well as the number of different sensor data and type thereof taken into account. Further, some of the sensor data may be weighted differently than other sensor data when determining the combination or set of sensor data which is indicative of the determined driving style.

According to an embodiment, the first group of sensor data includes sensor data indicative of a speed of the vehicle, the second group of sensor data includes sensor data indicative of a status of a throttle of the vehicle, and the third group of sensor data includes sensor data indicative of a RPM of the vehicle engine. That is, the first reference signal is indicative of a speed of the vehicle, the second reference signal is indicative of a status of a throttle of the vehicle, and the third reference signal is indicative of a RPM of the vehicle engine. These data - in their combination - are particularly useful for determining a meaningful vehicle driving style or motion profile.

According to an embodiment, the processing device is configured to receive at least a fourth reference signal indicative of sensor data of a fourth group which is different from the first, second and third groups of sensor data and includes sensor data indicative of an acceleration of the vehicle. That is, the fourth reference signal is indicative of an acceleration of the vehicle, e.g. longitudinal and/or lateral acceleration of the vehicle. The processing device is configured to determine the vehicle driving style category based on a combination of the at least first, second, third and fourth reference signals. These data from four different sensor categories are particularly useful for improving determination of a meaningful vehicle driving style or motion profile.

Preferably, the fourth group of sensor data includes sensor data indicative of a longitudinal acceleration and a lateral acceleration of the vehicle.

Particularly, the processing device is configured to determine the vehicle driving style category within a preset time frame. Preferably, the processing device is configured to receive a plurality of respective first, second and third reference signals in an accumulative manner within the time frame.

According to an embodiment, the processing device is configured to calculate respective average values from the respective plurality of first, second and third reference signals, and/or the processing device is configured to select respective extremum values from the respective plurality of first, second and third reference signals.

In an embodiment of the invention, the processing device is configured to determine the vehicle driving style category using an algorithm which receives as inputs the at least first, second and third reference signals. The algorithm is implemented to calculate a score value by combining values associated with the at least first, second and third reference signals, and to determine whether the score value falls within one of a plurality of bins, wherein each of the plurality of bins is indicative of a respective one of the plurality of vehicle driving style categories.

According to an embodiment, the calculation of the score value comprises at least one of: summing, subtracting, multiplication or division of one or more values associated with at least one of the first, second and third reference signals with one or more values associated with the respective other ones of the first, second and third reference signals.

According to an embodiment, at least some of the sound profiles of the plurality of sound profiles differ from each other in regards of one or more of: volume level, tone, vibrancy, clarity, one or more frequencies, and frequency bandwidth of the emitted sound.

In an embodiment, the processing device is configured to receive the at least first, second and third reference signals from a vehicle communications bus. For example, the vehicle communications bus is a digital vehicle communications bus which is connected to various sensors or sensor groups distributed over the vehicle, so that the reference signals can easily be sampled from the vehicle communications bus using its communications protocol.

In another aspect, the invention further relates to a vehicle comprising an active vehicle sound generating apparatus as described herein.

According to an embodiment, the vehicle further comprises one or more first sensors providing sensor data indicative of a speed of the vehicle, one or more second sensors providing sensor data indicative of a status of a throttle of the vehicle, one or more third sensors providing sensor data indicative of a RPM of the vehicle engine, and one or more fourth sensors providing sensor data indicative of an acceleration of the vehicle, wherein the processing device is configured to receive the reference signals from each of the first through fourth sensors. This combination of sensor data is particularly useful for determining a suitable vehicle driving style or motion profile.

For example, the processing device and/or parts of the processing device and sound generator may be implemented in hardware and/or in software. Each one or some of them, particularly the processing device, may be, for example, implemented in, or part of, an electronic control unit (ECU) or head unit (HU) of the vehicle, or may be a separate component (in hardware and/or software), or may be a distributed system (in hardware and/or software) using one or more processors and/or integrated circuits.

Aspects of the invention and embodiments will now be described with reference to the following Figures in which
- Fig. 1: depicts a schematic diagram illustrating an exemplary vehicle comprising an active vehicle sound generating apparatus according to an embodiment,
- Fig. 2: shows an active vehicle sound generating apparatus according to an embodiment of the invention,
- Fig. 3: shows a flow diagram of a determination process according to an algorithm implemented in an active vehicle sound generating apparatus according to an embodiment of the invention.

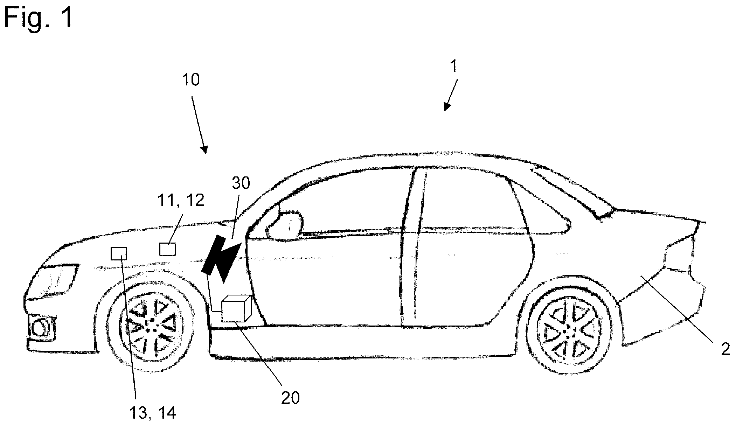

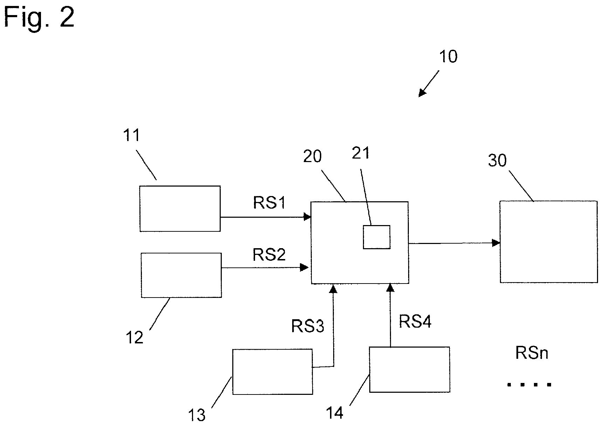

In Fig. 1 there is shown a schematic view of a vehicle according to an embodiment of the invention. Fig. 2 shows an active vehicle sound generating apparatus 10 according to an embodiment of the invention, which according to the embodiment of Fig. 1 is implemented in the vehicle 1. The vehicle 1 comprises a vehicle chassis 2 which carries, inter alia, a plurality of sensors typically used in a vehicle. As also shown in connection with Fig. 2, the vehicle 1, for example, comprises one or more first sensors 11 providing sensor data indicative of a speed of the vehicle, typically known as speed sensors. The vehicle 1 further comprises one or more second sensors 12 providing sensor data indicative of a status of a throttle of the vehicle. For example, such sensors are responsive to user input (e.g., in response to pushing down the throttle pedal) and may be used to determine the engine power for accelerating the vehicle or keeping the current vehicle's speed.

The vehicle 1 further comprises one or more third sensors 13 providing sensor data indicative of a RPM of the vehicle engine. The RPM may be provided in, or indicative of, any revolution value per time unit and shall be an abbreviation for revolution per time unit of a rotating element of the engine. The engine may be a combustion engine of any known type, or an electric machine as used in, e.g., an electric or hybrid driven vehicle. The vehicle 1 further comprises one or more fourth sensors 14 providing sensor data indicative of an acceleration of the vehicle, such as sensor data indicative of a longitudinal acceleration and a lateral acceleration of the vehicle. Longitudinal acceleration comprises (positive) acceleration resulting from accelerating the vehicle, e.g. by pushing down the throttle pedal and demanding increased driving power from the engine, and (negative) acceleration resulting from, e.g. braking the vehicle. Lateral acceleration or transverse acceleration comprises, e.g., lateral G-forces acting on the vehicle, driver and passengers resulting from changing driving direction, e.g. when driving through curves at a particular speed. The vehicle 1 may comprise further sensors or sensor groups not illustrated in the present embodiment.

The one or more first sensors 11 provide sensor data, which sensor data are of a type belonging to a first group of sensor data. The one or more second sensors 12 provide sensor data of a type belonging to a second group of sensor data, the one or more third sensors 13 provide sensor data of a type belonging to a third group of sensor data, and the one or more fourth sensors 14 provide sensor data of a type belonging to a fourth group of sensor data. The first, second, third, and fourth groups of sensor data (which may indicate different physical properties and/or physical statuses of the vehicle 1) are different from each other and respectively include sensor data not included in the respective other groups of sensor data, particularly they are distinct regarding sensor type and/or data content provided by the sensors. A group of sensor data as understood herein may also include sensor data from only one sensor. Each of the sensors 11, 12, 13 and 14 may directly or indirectly provide one or more respective reference signals RS1 through RS4 as explained in more detail below. The reference signals RS1 through RS4 may be analog or digital signals or data of any format indicative of the respective sensor data, and may be provided by the respective sensors in wired or wireless manner, or may be respective sensor data frames transmitted over and received from the vehicle communications bus using the bus communications protocol. In a preferred implementation, the sensors 11 to 14, along with a processing device 20 explained in more detail below, are coupled with a vehicle communications bus not explicitly shown. For example, the vehicle communications bus may be a commonly known CAN-Bus, and may run through various regions of the vehicle and coupled to various components of the vehicle.

The active vehicle sound generating apparatus 10 further comprises at least one sound generator 30 coupled with the processing device 20 for generating and emitting sound with a particular sound profile. For example, the at least one sound generator 30 comprises one or more loudspeakers, or is implemented mechanically as commonly known in the art, e.g. by appropriate one or more flaps, hatches, valves, dampers, shutters etc. which are adjusted/opened/closed as needed to generate a particular sound. The at least one sound generator 30 is coupled with the processing device 20 which serves as a control unit for generating the sound, i.e. provides the appropriate control signals to the respective sound generating device. For example, if the at least one sound generator 30 comprises one or more loudspeakers, the processing device 20 may incorporate a digital sound processor (DSP) which controls the one or more loudspeakers appropriately. In a DSP, control signals are generated which cause the sound generator 30 to emit sound waves having a particular volume level, tone, vibrancy, clarity, one or more particular frequencies, and/or frequency bandwidth. The at least one sound generator 30 can be located in any appropriate location of the vehicle 1.

In such configuration, the at least one sound generator 30 is configured to superimpose emitted sound having a determined sound profile, e.g. emitted by one or more loudspeakers controlled by a DSP appropriately, with (natural) vehicle sound emitted by an engine of the vehicle during vehicle motion to generate a composite vehicle motion sound. Such composite vehicle motion sound may be "composed", e.g. by the DSP, to increase or enhance the driver's or passengers' driving experience depending on the particular driving style or motion profile the driver is currently performing when driving the vehicle. Accordingly, the generated composite vehicle motion sound is different depending on the particular vehicle driving style.

The processing device 20 may be part of a control unit, e.g. of an ECU or head unit, of the vehicle 1. As shown in Fig. 2, the processing device 20 may be, or may comprise one or more processors 21, such as microprocessors, which is programmed to perform the functions as set out herein. The processing device 20 is coupled with the sensors 11 - 14 in wired or wirelessly, e.g. in a peer-to-peer fashion or through a vehicle's CAN bus. The processing device 20 is further coupled with one or more sound generators 30, either directly or via the vehicle's CAN bus, for emitting sound with a particular sound profile determined by the processing device 20.

The processing device 20 is further configured to determine a vehicle driving style category from a plurality of vehicle driving style categories based on a combination or set of the first, second, third, and fourth reference signals RS1 though RS4. The processing device may also receive further reference signals (i.e. up to RSn) from further groups of vehicle sensors. The processing device 20 determines the sound profile emitted by the sound generator 30 from a plurality of sound profiles dependent on the determined vehicle driving style category. For example, the processing device 20 determines the vehicle driving style category within a preset time frame, e.g. 30-60 seconds which may serve as a time threshold for the "present driving style". According to an embodiment, a plurality of respective first through fourth reference signals RS1-RS4 is received in an accumulative manner within the time frame.

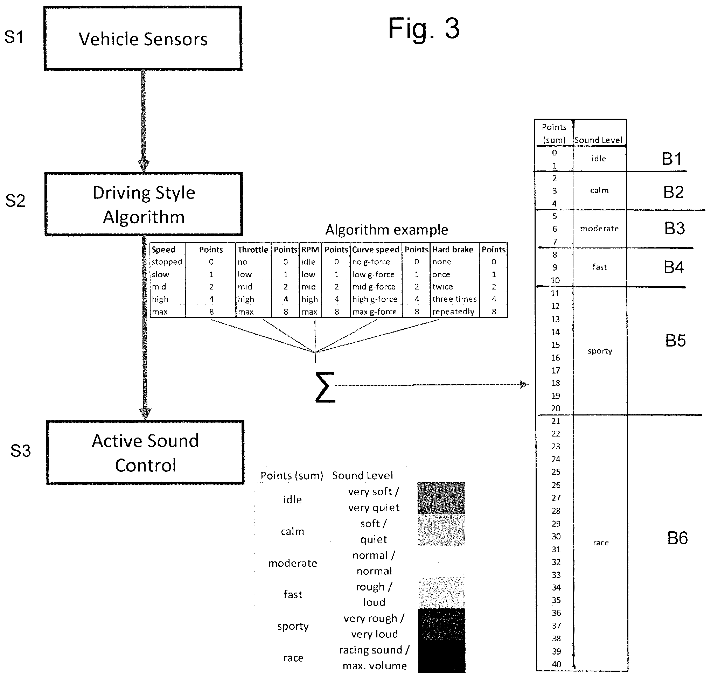

Fig. 3 shows a flow diagram of an exemplary determination process according to a potential algorithm implemented in an active vehicle sound generating apparatus according to an embodiment of the invention.

In a step S1, the processing device 20 is coupled with the vehicle bus to retrieve relevant vehicle sensor data through reference signals RS1 to RS4 or more, e.g. any combination of: vehicle setting (soft, normal, sporty), speed, RPM, throttle strength, brake force, curve speed, high / low gear, slope / grade, G-force (lateral / longitudinal).

In step S2, the sensor information received with the reference signals RS1 through RS4 or more is combined by an algorithm to determine the present driving style, e.g.:
- Vehicle stopped: points promoting driving style towards "Idle"
- No throttle: points promoting driving style towards "Calm"
- Low throttle: points promoting driving style towards "Moderate"
- Medium throttle: points promoting driving style towards "Fast"
- High throttle: points promoting driving style towards "Sporty"
- Max throttle: points promoting driving style towards "Race"
- G-force low: subtract -1 points
- G-force high: add +1 points
- After sharp brake: add +1 points
- High RPM: add +1 points
- High speed: add +1 points
- Maximum change is -2 or +2 points

For example, sensor samples are accumulated over a time period of 30-60 seconds which serves as time threshold for the "present driving style".

In step S3, the processing device 20 then determines the emitted sound profile of the one or more sound generators 30, and thus the composite vehicle motion sound based on the determined driving style:
- Idle: very quiet
- Calm: very soft / quiet
- Moderate: soft / normal
- Fast: rough / loud
- Sporty: very rough / very loud
- Race: racing sound / maximum volume

On the right hand side of Fig. 3, an exemplary calculation is depicted according to which points (values) derived from the respective reference signals RS1-RSn (e.g. low speed: 1 point, high RPM: 4 points, mid throttle: 2 points, etc.) are accumulated or subtracted depending on the respective reference signal (sensor data) within the particular time period to calculate a total score value by summing up the points associated with the respective received reference signals. After summing up and/or subtracting of the respective values, the processing device 20 determines whether the score value falls within one of a plurality of bins B1 to B6, wherein each of the plurality of bins B1 to B6 is indicative of a respective one of the plurality of vehicle driving style categories. For example, bin B1 (comprising total amount of 0-1 points) is indicative of driving style category "Idle", and bin B6 (comprising total amount of 21-40 points) is indicative of driving style category "Race". The processing device 20 then controls the at least one sound generator 30 appropriately to generate the respective composite vehicle motion sound depending on the driving style category corresponding to the respective determined bin.

According to an embodiment, respective average values from the respective plurality of reference signals may be calculated, and/or respective extremum values from the plurality of reference signals may be selected. For example, the first reference signals RS1 may be averaged, or extremum values (e.g. maximum or minimum values) may be selected from the plurality of first reference signals RS1 within the time period of 30-60 seconds.

In the alternative or additionally, the calculation in step S2 may also comprise multiplication and/or division of values associated with at least one of the reference signals RS1-RSn with one or more values associated with the respective other ones of the reference signals.

With the present invention, it is possible to improve the driver's or passengers' engine sound feeling during, e.g., sporty driving, while providing the possibility of providing silence in the vehicle's passenger space when driving calm.

## Claims

1. An active vehicle sound generating apparatus (10), comprising:
- a processing device (20) configured to receive at least a first, second and third reference signal (RS1-RS3), wherein the first reference signal (RS1) is indicative of sensor data of a first group (11), the second reference signal (RS2) is indicative of sensor data of a second group (12), and the third reference signal (RS3) is indicative of sensor data of a third group (13), wherein the first, second and third groups (11, 12, 13) of sensor data are different from each other and respectively include sensor data not included in the respective other groups of sensor data,
- the processing device (20) configured to determine a vehicle driving style category from a plurality of vehicle driving style categories based on a combination of the at least first, second and third reference signals (RS1-RS3),
- at least one sound generator (30) coupled with the processing device (20) for generating and emitting sound with a sound profile including one or more sound frequencies,
- wherein the processing device (20) is configured to determine the sound profile from a plurality of sound profiles dependent on the determined vehicle driving style category,
- wherein the at least one sound generator (30) is configured to superimpose the emitted sound having the determined sound profile with vehicle sound emitted by an engine of the vehicle (1) during vehicle motion to generate a composite vehicle motion sound.

2. The active vehicle sound generating apparatus according to claim 1, wherein the first group (11) of sensor data includes sensor data indicative of a speed of the vehicle, the second group (12) of sensor data includes sensor data indicative of a status of a throttle of the vehicle, and the third group (13) of sensor data includes sensor data indicative of a RPM of the vehicle engine.

3. The active vehicle sound generating apparatus according to claim 1 or 2,
- wherein the processing device (20) is configured to receive at least a fourth reference signal (RS4) indicative of sensor data of a fourth group (14) which is different from the first, second and third groups (11, 12, 13) of sensor data and includes sensor data indicative of an acceleration of the vehicle (1), and
- the processing device (20) is configured to determine the vehicle driving style category based on a combination of the at least first, second, third and fourth reference signals (RS1-RS4).

4. The active vehicle sound generating apparatus according to claim 3, wherein the fourth group (14) of sensor data includes sensor data indicative of a longitudinal acceleration and a lateral acceleration of the vehicle.

5. The active vehicle sound generating apparatus according to one of claims 1 to 4, wherein the processing device (20) is configured to determine the vehicle driving style category within a preset time frame.

6. The active vehicle sound generating apparatus according to claim 5, wherein the processing device (20) is configured to receive a plurality of respective first, second and third reference signals (RS1-RS3) in an accumulative manner within the time frame.

7. The active vehicle sound generating apparatus according to claim 6, wherein the processing device (20) is configured to calculate respective average values from the respective plurality of first, second and third reference signals (RS1-RS3), and/or the processing device (20) is configured to select respective extremum values from the respective plurality of first, second and third reference signals (RS1-RS3).

8. The active vehicle sound generating apparatus according to one of claims 1 to 7, wherein
- the processing device (20) is configured to determine the vehicle driving style category using an algorithm which receives as inputs the at least first, second and third reference signals (RS1-RS3),
- wherein the algorithm is implemented to calculate a score value by combining values associated with the at least first, second and third reference signals (RS1-RS3), and to determine whether the score value falls within one of a plurality of bins (B1-B6), wherein each of the plurality of bins (B1-B6) is indicative of a respective one of the plurality of vehicle driving style categories.

9. The active vehicle sound generating apparatus according to claim 8, wherein the calculation of the score value comprises at least one of: summing, subtracting, multiplication or division of one or more values associated with at least one of the first, second and third reference signals (RS1-RS3) with one or more values associated with the respective other ones of the first, second and third reference signals (RS1-RS3).

10. The active vehicle sound generating apparatus according to one of claims 1 to 9, wherein at least some of the sound profiles of the plurality of sound profiles differ from each other in regards of one or more of: volume level, tone, vibrancy, clarity, one or more frequencies, and frequency bandwidth of the emitted sound.

11. The active vehicle sound generating apparatus according to one of claims 1 to 10, wherein the processing device (20) is configured to receive the at least first, second and third reference signals (RS1-RS3) from a vehicle communications bus.

12. A vehicle (1) comprising an active vehicle sound generating apparatus (10) according to one of the preceding claims.

13. The vehicle according to claim 12, further comprising one or more first sensors (11) providing sensor data indicative of a speed of the vehicle, one or more second sensors (12) providing sensor data indicative of a status of a throttle of the vehicle, one or more third sensors (13) providing sensor data indicative of a RPM of the vehicle engine, and one or more fourth sensors (14) providing sensor data indicative of an acceleration of the vehicle, wherein the processing device (20) is configured to receive the reference signals (RS1-RS4) from each of the first through fourth sensors (11-14).
